# EUROPEAN PATENT APPLICATION

(11) **EP 4 624 632 A1**
(43) Date of publication of application: **01.10.2025**
(21) Application number: 24891565.4
(22) Date of filing: 03.05.2024
(51) Int. Cl.: C25C 1/12, C22B 3/08

(54) **METHOD FOR RECOVERING COPPER**

(30) Priority: 14.11.2023 KR 20230157392
(71) Applicant: Korea Zinc Co., Ltd., Seoul 03159 (KR)
(72) Inventor: KIM, Seong Rip, Ulsan 44753 (KR); JOO, Jae Hoon, Ulju-gun, Ulsan 45003 (KR)
(74) Representative: Angerhausen, Christoph
(86) International application number: PCT/KR2024/005996
(87) International publication number: WO 2025/105616

(57) **Abstract**

According to the one embodiment of the present invention, a method for recovering copper, the method comprising: a pressure leaching process for pressure leaching a copper-containing raw material in a spent electrolyte containing copper and sulfuric acid to leach the copper contained in the raw material and precipitate the iron contained in the raw material in a form of iron oxide; and an electrolytic process of electrolyzing a post-pressure leaching process solution discharged from the pressure leaching process to electrodeposit and recover copper at a cathode, wherein the post-pressure leaching process solution contains sulfuric acid at a concentration of 20 g/L to 40 g/L, and the pressure leaching process is carried out at a reaction temperature of 150°C to 200°C.

## Description

### TECHNICAL FIELD

The present disclosure relates to a method for recovering copper, which involves pressure leaching a material containing copper in a spent electrolyte containing copper and sulfuric acid to leach copper from the material while precipitating and removing iron, thereby reducing the concentration of iron in the electrolyte for copper recovery.

### BACKGROUND ART

The process of recovering pure copper from materials containing copper generally involves leaching the material in a sulfuric acid solution under atmospheric or pressurized conditions. In atmospheric leaching, to increase the efficiency of copper leaching, the reaction must continue for more than 16 hours, which requires the use of more oxygen and steam, thus increasing the cost and decreasing the efficiency of copper recovery.

Moreover, materials containing copper also contain other elements like iron. In the case of atmospheric leaching, iron is leached along with copper, which can lead to increased iron concentrations in the electrolyte of the subsequent electrolytic process. High concentrations of iron in the electrolyte can cause corrosion of the zinc electrodeposited at the cathode of the electrolytic process, reducing the hydrogen overpotential and decreasing the current efficiency due to the redox reactions of Fe²⁺ and Fe³⁺ ions in the sulfuric acid solution. This necessitates additional processes to remove impurities.

### DISCLOSURE

### TECHNICAL PROBLEM

Provided is a method for recovering copper in which reaction temperature, pressure, and sulfuric acid concentration conditions for the pressure leaching process are adjusted to maintain high leaching rates for copper while increasing the precipitation rate of iron.

Furthermore, provided is a method for recovering copper in which the concentration of iron in the electrolyte introduced into an electrolytic process is reduced to improve the current efficiency of the electrolytic process.

### TECHNICAL SOLUTION

According to the one embodiment of the present invention, a method for recovering copper, the method comprising: a pressure leaching process for pressure leaching a copper-containing raw material in a spent electrolyte containing copper and sulfuric acid to leach the copper contained in the raw material and precipitate the iron contained in the raw material in a form of iron oxide; and an electrolytic process of electrolyzing a post-pressure leaching process solution discharged from the pressure leaching process to electrodeposit and recover copper at a cathode, wherein the post-pressure leaching process solution contains sulfuric acid at a concentration of 20 g/L to 40 g/L, and the pressure leaching process is carried out at a reaction temperature of 150°C to 200°C.

Iron precipitates at a rate of 84% or higher and copper is leached at a rate of 83% or higher in the pressure leaching process.

According to the other embodiment of the present invention, a method for recovering copper, the method comprising: a pressure leaching process for pressure leaching a copper-containing raw material in a spent electrolyte containing copper and sulfuric acid to leach the copper contained in the raw material and precipitate the iron contained in the raw material in a form of iron oxide; and an electrolytic process of electrolyzing a post-pressure leaching process solution discharged from the pressure leaching process to electrodeposit and recover copper at a cathode, wherein the post-pressure leaching process solution contains sulfuric acid at a concentration of 20 g/L to 60 g/L, and the pressure leaching process is carried out at a reaction temperature of 180°C to 200°C.

Iron precipitates at a rate of 84% or higher and copper is leached at a rate of 91% or higher in the pressure leaching process.

The pressure leaching process is conducted at an autoclave.

The autoclave is set to have an internal pressure of 900 kPa and 2,000 kPa.

The pressure leaching process is conducted by injecting oxygen into the autoclave.

The post-pressure leaching process solution is treated using a thickener and filter, so that a discharged solution is transferred to the electrolytic process as an an electrolytic process input solution, and solid matter is discharged as iron oxide.

The pressure leaching process is carried out for a reaction time of 5 hours and 7 hours.

The pressure leaching process allows for the leaching of copper and the precipitation of iron simultaneously.

### ADVANTAGEOUS EFFECTS

According to the present disclosure, reaction temperature, pressure, and post-reaction sulfuric acid concentration conditions in a pressure leaching process are controlled to maintain high copper leaching rates while increasing the precipitation rate of iron, thus minimizing the need for additional iron removal processes in the copper recovery process.

Moreover, designed to lower the concentration of iron in the electrolyte fed into the electrolytic process, the method seeks to enhance the current efficiency of the electrolytic process involved in copper recovery.

### DESCRIPTION OF DRAWINGS

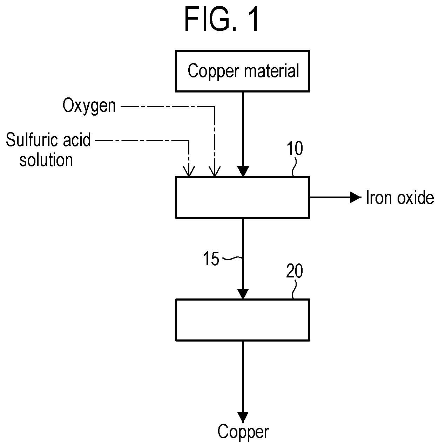

FIG. 1 shows a process flow diagram for recovering copper according to an embodiment of the present disclosure.

### MODE FOR INVENTION

In typical copper recovery processes, materials containing copper are leached in sulfuric acid, where not only copper but also iron is leached. The entrance of iron leached with copper into the electrolyte used in the electrolytic process can reduce the current efficiency during the electrolysis required for copper deposition, so that it is necessary to precipitate and remove iron while maintaining the leaching rate of the copper contained in the sulfuric solution.

The present disclosure improves the current efficiency in the electrolytic process by ensuring that in the pressure leaching process, copper is leached at a rate of 95% or higher and iron is precipitated and removed at a rate of 84% or higher.

FIG. 1 illustrates a process flow diagram for recovering copper according to an embodiment of the present disclosure.

With reference to FIG. 1, a material containing copper is introduced together with an acid solution into an autoclave, which is a pressurizing device, and oxygen is injected to the autoclave to facilitate the pressure leaching (pressure leaching process (10)). The acid solution may be a spent electrolyte containing copper at a concentration of 30g/L to 40g/L and a sulfuric acid at a concentration of 160g/L to 170g/L. By pressure leaching the copper-containing material together with the spent electrolyte containing copper, the copper contained in the raw material can be leached while the iron contained in the raw material can be precipitated in the form of iron oxide. In addition, the reaction time for the pressure leaching process (10) may range from 5 to 7 hours, with oxygen used as the oxidizing agent.

Specifically, when materials containing copper and iron are pressure leached, together with copper electrolyte solution, copper and iron are leached as sulfates according to the following Reaction Formulas (1) and (2). The pressure leaching process (10) takes place in an autoclave where temperatures may range from 150°C to 200°C and the internal pressure may range from 900 kPa to 2,000 kPa. The reactions for the leaching of copper and iron contained in the material proceed as illustrated by the following Reaction Formulas 1 and 2:

CuS + H₂SO₄ + 1/2O₂ → CuSO₄ + H₂O + S ... Reaction Formula (1)

FeS + H₂SO₄ + 1/2O₂ → FeSO₄ + H₂O + S ... Reaction Formula (2)

Here, the pressure leaching process (10) is carried out while oxygen is injected into the autoclave, causing the iron to potentially oxidize to Fe (III). The oxidation of Fe(II) to Fe(III) proceeds as illustrated by the following Reaction Formula 3:

2Fe²⁺ + 2H⁺ +1/2O₂ → 2Fe³⁺ + H₂O ... Reaction Formula (3)

The iron leached as Fe(III) precipitates as jarosite according to the following Reaction Formula (4) or hematite according to the following Reaction Formula (5).

MSO₄ + 3Fe₂(SO₄)₃ +12H₂O → 2MFe₃(SO₄)₂(OH)₆ + 6H₂SO₄ (M= K, Na) ... Reaction Formula (4)

Fe₂(SO₄)₃ + 4H₂O → Fe₂O₃ + 3H₂SO₄ + H₂O ... Reaction Formula (5)

Through these reactions, the copper contained in the material is mostly leached into the spent electrolyte containing copper and exists as copper ions in the solution, while the iron mostly precipitates as iron oxide such as either jarosite or hematite. The leaching of copper and precipitation of iron, as described by Reaction Formulas (1) to (5), occur simultaneously through the pressure leaching process (10).

Subsequently, the post-pressure leaching process solution discharged from the pressure leaching process (10) is treated using a thickener and a filter, so that a discharged solution is transferred to the electrolytic process (20) as an an electrolytic process input solution (15), and solid matter is discharged as iron oxide.

The electrolytic process input solution (15), which is input into the electrolytic process (20), can be considered a pure copper electrolyte solution, substantially free of impurities. Copper is then recovered by electrodepositing the electrolytic process input solution (15) at the cathode during the electrolytic process.

Below, a pressure leaching process according to an embodiment of the present was carried out using an autoclave and materials containing 29.8% copper (Cu), 23.5% lead (Pb), and 4.49% iron (Fe). The process conditions, such as the reaction temperature and the sulfuric acid concentration in the post-pressure leaching process solution, were varied. The leaching solution used contained 30 to 40 g/L of copper and 160 to 170 g/L of sulfuric acid. The solid density of the materials inputted was set at 150 g/L, and the reaction was conducted over a period of 5 hours. The composition of the copper-containing material used in the experiment is as follows:

**TABLE 1**

| Composition of copper-containing material used | | | |
|---|---|---|---|
| | Copper (Cu) | Lead (Pb) | Iron (Fe) |
| Content (%) | 29.8 | 23.5 | 4.49 |

### EXAMPLE 1

In Example 1, the reaction temperature and pressure in an autoclave were adjusted to 150°C and 900 kPa, respectively, to conduct the pressure leaching process according to the present disclosure. After the reaction, the sulfuric acid concentration in the post-pressure leaching process solution was adjusted to evaluate the leaching rate of copper and the precipitation rate of iron. In this Example, the sulfuric acid concentration in the post-pressure leaching process solution was set to be 20 g/L, 40 g/L, and 60 g/L, and the corresponding iron precipitation and copper leaching rates (%) were measured.

**TABLE 2**

| Iron Precipitation and Copper Leaching Rates at 150°C Depending on Sulfuric Acid Concentration | | | | |
|---|---|---|---|---|
| | Reaction Temp. (°C) | Sulfuric acid Conc. in Post-pressure Leaching Process Solution (g/L) | Iron Precipitation Rate (%) | Copper Leaching Rate (%) |
| Inventive Ex. 1 | 150 | 20 | 98.1 | 83.3 |
| Inventive Ex. 2 | 150 | 40 | 95.8 | 94.8 |
| Comparative Ex. 1 | 150 | 60 | 4.01 | 95.1 |

As shown in Table 2, at a reaction temperature of 150°C, when the sulfuric acid concentration in the post-pressure leaching process solution was 20 g/L and 40 g/L, both iron precipitation and copper leaching rates were high, with iron precipitation over 95% and copper leaching over 83%. However, when the sulfuric acid concentration was 60 g/L, while the copper leaching rate remained high at over 95%, the iron precipitation rate was significantly lower at 4.01%, indicating that iron was not effectively removed as ferric oxide and remained in substantial amounts in the post-pressure leaching process solution. Therefore, at a reaction temperature of 150°C and a sulfuric acid concentration of 20 g/L to 40 g/L in the post-pressure leaching process solution, it is possible to substantially leach copper while keeping iron concentrations low in the electrolyte for the electrolytic process, thus improving the current efficiency of the copper recovery process. Conversely, when the sulfuric acid concentration in the post-pressure leaching process solution is above 60 g/L at a reaction temperature of 150°C, the low iron precipitation rate results in high iron content in the post-pressure leaching process solution, reducing the current efficiency in the electrolytic process.

### EXAMPLE 2

In Example 2, the reaction temperature and pressure in the autoclave were adjusted to 160°C and 1,000 kPa, respectively, to carry out the pressure leaching process according to the present disclosure. After the reaction, the sulfuric acid concentration in the post-pressure leaching process solution was adjusted to evaluate the leaching rate of copper and the precipitation rate of iron. In this Example, the sulfuric acid concentration in the post-pressure leaching process solution was set to be 20 g/L, 40 g/L, and 60 g/L, and the corresponding iron precipitation and copper leaching rates (%) were assessed.

**TABLE 3**

| Iron Precipitation and Copper Leaching Rates at 160°C Depending on Sulfuric Acid Concentration | | | | |
|---|---|---|---|---|
| | Reaction Temp. (°C) | Sulfuric acid Conc. in Post-pressure Leaching Process Solution (g/L) | Iron Precipitation Rate (%) | Copper Leaching Rate (%) |
| Inventive Ex. 3 | 160 | 20 | 98.3 | 86.6 |
| Inventive Ex. 4 | 160 | 40 | 96.4 | 94.6 |
| Comparative Ex. 2 | 160 | 60 | 6.45 | 95.2 |

As shown in Table 3, at a reaction temperature of 160°C, when the sulfuric acid concentration in the post-pressure leaching process solution was 20 g/L and 40 g/L, both iron precipitation and copper leaching rates were high, with iron precipitation over 96% and copper leaching over 86%. However, when the sulfuric acid concentration was 60 g/L, while the copper leaching rate remained high at over 95%, the iron precipitation rate was significantly lower at 6.45%, indicating that iron was not effectively removed as ferric oxide and remained in substantial amounts in the post-pressure leaching process solution. Therefore, at a reaction temperature of 160°C and a sulfuric acid concentration of 20 g/L to 40 g/L in the post-pressure leaching process solution, it is possible to substantially leach copper while keeping iron concentrations low in the electrolyte for the electrolytic process, thus improving the current efficiency of the copper recovery process. Conversely, when the sulfuric acid concentration in the post-pressure leaching process solution is above 60 g/L at a reaction temperature of 160°C, the low iron precipitation rate results in high iron content in the post-pressure leaching process solution, reducing the current efficiency in the electrolytic process.

### EXAMPLE 3

In Example 3, the reaction temperature and pressure in the autoclave were adjusted to 180°C and 1,400 kPa, respectively, to carry out the pressure leaching process as per the present disclosure. After the reaction, the sulfuric acid concentration in the post-pressure leaching process solution was adjusted to evaluate the leaching rate of copper and the precipitation rate of iron. In this Example, the sulfuric acid concentration in the post-pressure leaching process solution was set to be 20 g/L, 60 g/L, and 80 g/L, and the corresponding iron precipitation and copper leaching rates (%) were assessed.

**TABLE 4**

| Iron Precipitation and Copper Leaching Rates at 180°C Depending on Sulfuric Acid Concentration | | | | |
|---|---|---|---|---|
| | Reaction Temp. (°C) | Sulfuric acid Conc. in Post-pressure Leaching Process Solution (g/L) | Iron Precipitation Rate (%) | Copper Leaching Rate (%) |
| Inventive Ex. 5 | 180 | 20 | 98.5 | 91.3 |
| Inventive Ex. 6 | 180 | 60 | 84.4 | 95.6 |
| Comparative Ex. 3 | 180 | 80 | 42.8 | 96.4 |

From Table 4, it is observed that at a reaction temperature of 180°C, when the sulfuric acid concentration in the post-pressure leaching process solution was 20 g/L and 60 g/L, both iron precipitation and copper leaching rates were high, with iron precipitation over 84% and copper leaching over 91%. Even at a sulfuric acid concentration of 60 g/L in the post-pressure leaching process solution and at a reaction temperature of 180°C, a commendable iron precipitation rate of over 84% was maintained. However, at a sulfuric acid concentration of 80 g/L in the post-pressure leaching process solution, although the copper leaching rate remained high at over 96%, the iron precipitation rate was significantly lower at 42.8%, indicating that less than half of the iron was precipitated, leaving a substantial amount of iron in the post-pressure leaching process solution. Therefore, at a reaction temperature of 180°C and with sulfuric acid concentrations between 20 g/L and 60 g/L in the post-pressure leaching process solution, it is possible to significantly leach copper while keeping the iron concentration in the electrolyte low for the electrolytic process, thereby enhancing the current efficiency of the copper recovery process. Conversely, when the sulfuric acid concentration in the post-pressure leaching process solution is above 80 g/L at a reaction temperature of 180°C, the low iron precipitation rate results in high iron content in the post-pressure leaching process solution, adversely affecting the current efficiency in the electrolytic process.

### EXAMPLE 4

In Example 4, the reaction temperature and pressure in the autoclave were adjusted to 200°C and 2,000 kPa, respectively, to carry out the pressure leaching process as per the present disclosure. After the reaction, the sulfuric acid concentration in the post-pressure leaching process solution was adjusted to evaluate the leaching rate of copper and the precipitation rate of iron. In this Example, the sulfuric acid concentration in the post-pressure leaching process solution was set to be 20 g/L, 60 g/L, and 80 g/L, and the corresponding iron precipitation and copper leaching rates (%) were assessed.

**TABLE 5**

| Iron Precipitation and Copper Leaching Rates at 200°C Depending on Sulfuric Acid Concentration | | | | |
|---|---|---|---|---|
| | Reaction Temp. (°C) | Sulfuric acid Conc. in Post-pressure Leaching Process Solution (g/L) | Iron Precipitation Rate (%) | Copper Leaching Rate (%) |
| Inventive Ex. 7 | 200 | 20 | 98.8 | 92.8 |
| Inventive Ex. 8 | 200 | 60 | 86.3 | 95.9 |
| Comparative Ex. 4 | 200 | 80 | 31.3 | 98.1 |

From Table 5, it is evident that at a reaction temperature of 200°C, when the sulfuric acid concentration in the post-pressure leaching process solution is 20 g/L and 60 g/L, both iron precipitation and copper leaching rates are high, with iron precipitation above 86% and copper leaching above 92%. Notably, even when the sulfuric acid concentration in the post-pressure leaching process solution is as high as 60 g/L at a reaction temperature of 200°C, a respectable iron precipitation rate of over 86% is achieved. However, at a sulfuric acid concentration of 80 g/L, although the copper leaching rate is impressively high at over 98%, the iron precipitation rate is significantly lower at 31.3%, indicating that less than half of the iron is precipitated, leaving a substantial amount of iron in the post-pressure leaching process solution. Therefore, at a reaction temperature of 200°C and with sulfuric acid concentrations between 20 g/L and 60 g/L in the post-pressure leaching process solution, effective copper leaching is achievable while maintaining low iron concentrations in the electrolyte for the electrolytic process, thus enhancing the current efficiency of the copper recovery process. Conversely, when the sulfuric acid concentration in the post-pressure leaching process solution is above 80 g/L at a reaction temperature of 200°C, the low iron precipitation rate results in high iron content in the post-pressure leaching process solution, adversely affecting the current efficiency in the electrolytic process.

As is understood from the experimental results according to the embodiment of the present disclosure, maintaining the reaction temperature inside the autoclave used for the pressure leaching process between 150°C to 200°C allows for iron precipitation rates of over 84% and copper leaching rates of over 83% when the sulfuric acid concentration in the post-pressure leaching process solution can be between 20 g/L to 40 g/L.

Furthermore, by keeping the internal reaction temperature of the autoclave at 180°C to 200°C, the iron precipitation rate remains above 84% and the copper leaching rate above 91% with sulfuric acid concentrations in the post-pressure leaching process solution between 20 g/L to 60 g/L.

Especially, when the internal reaction temperature of the autoclave is maintained between 150°C to 160°C and the sulfuric acid concentration in the post-pressure leaching process solution is kept at 40 g/L, the iron precipitation rate can be increased to over 95% and the copper leaching rate to over 94%. Also, even if the sulfuric acid concentration in the post-pressure leaching process solution increases to 60 g/L, both the iron precipitation rate and the copper leaching rate can be kept high at over 84% and 95%, respectively, by maintaining the internal reaction temperature at 180°C to 200°C.

As reviewed, by adjusting the reaction temperature and pressure in the pressure leaching process, and the sulfuric acid concentration in the post-pressure leaching process solution according to the present disclosure, it is possible to maintain high copper leaching and iron precipitation rates. This allows for reducing the concentration of iron in the electrolyte introduced into the electrolytic process, thereby enhancing the current efficiency for copper recovery.

The technical idea of the present disclosure has been described heretofore with reference to some embodiments and examples shown in the accompanying drawings. However, it is to be understood that various substitutions, modifications and alterations may be made without departing from the technical idea and scope of the present disclosure that can be understood by those of ordinary skill in the technical field to which the present disclosure pertains. Further, it is to be understood that such substitutions, modifications and alterations fall within the appended claims.

## Claims

1. A method for recovering copper, the method comprising:
a pressure leaching process for pressure leaching a copper-containing raw material in a spent electrolyte containing copper and sulfuric acid to leach the copper contained in the raw material and precipitate the iron contained in the raw material in a form of iron oxide; and
an electrolytic process of electrolyzing a post-pressure leaching process solution discharged from the pressure leaching process to electrodeposit and recover copper at a cathode,
wherein the post-pressure leaching process solution contains sulfuric acid at a concentration of 20 g/L to 40 g/L, and the pressure leaching process is carried out at a reaction temperature of 150°C to 200°C.

2. The method of claim 1, wherein iron precipitates at a rate of 84% or higher and copper is leached at a rate of 83% or higher in the pressure leaching process.

3. A method for recovering copper, the method comprising:
a pressure leaching process for pressure leaching a copper-containing raw material in a spent electrolyte containing copper and sulfuric acid to leach the copper contained in the raw material and precipitate the iron contained in the raw material in a form of iron oxide; and
an electrolytic process of electrolyzing a post-pressure leaching process solution discharged from the pressure leaching process to electrodeposit and recover copper at a cathode,
wherein the post-pressure leaching process solution contains sulfuric acid at a concentration of 20 g/L to 60 g/L, and the pressure leaching process is carried out at a reaction temperature of 180°C to 200°C.

4. The method of claim 3, wherein iron precipitates at a rate of 84% or higher and copper is leached at a rate of 91% or higher in the pressure leaching process.

5. The method of claim 1 or 3, wherein the pressure leaching process is conducted at an autoclave.

6. The method of claim 5, wherein the autoclave is set to have an internal pressure of 900 kPa and 2,000 kPa.

7. The method of claim 5, wherein the pressure leaching process is conducted by injecting oxygen into the autoclave.

8. The method of claim 1 or 3, wherein the post-pressure leaching process solution is treated using a thickener and filter, so that a discharged solution is transferred to the electrolytic process as an an electrolytic process input solution, and solid matter is discharged as iron oxide.

9. The method of claim 1 or 3, wherein the pressure leaching process is carried out for a reaction time of 5 hours and 7 hours.

10. The method of claim 1 or 3, wherein the pressure leaching process allows for the leaching of copper and the precipitation of iron simultaneously.
